**Europäisches Patentamt**

**European Patent Office**

**Office européen des brevets**

(11) Veröffentlichungsnummer: **0 174 037**

**A1**

(12) **EUROPÄISCHE PATENTANMELDUNG**

(21) Anmeldenummer: **85201001.6**

(22) Anmeldetag: **25.06.85**

(51) Int. Cl.⁴: **B 01 D 46/34**

(30) Priorität: **25.07.84 DE 3427320**

(43) Veröffentlichungstag der Anmeldung:
**12.03.86 Patentblatt 86/11**

(84) Benannte Vertragsstaaten:
**DE FR GB IT**

(71) Anmelder: **METALLGESELLSCHAFT AG**
**Reuterweg 14 Postfach 3724**
**D-6000 Frankfurt/M.1(DE)**

(72) Erfinder: **Furlan, Pietro**
**Via Ripamonti 255**
**I-20141 Milano(IT)**

(74) Vertreter: **Rieger, Harald**
**Reuterweg 14**
**D-6000 Frankfurt a.M.(DE)**

(54) **Granulatfilter.**

(57) Das Granulatfilter besitzt mindestens eine Filterschicht, die zwischen zwei gasdurchlässigen Wänden eingeschlossen ist. Zum Entstauben strömt das Gas durch eine Reinigungszone der körnigen Filterschicht. Im Bereich der Reinigungszone ist die Filterschicht durch mindestens eine schräg verlaufende Wand von oben nach unten verbreitert ausgebildet. Bevorzugt ist die Wand um einen Winkel von etwa 5 bis 20°, gegen die Senkrechte gemessen, schräg verlaufend ausgebildet. Wenn beide Wände schräg verlaufen, bildet jede Wand gegen die Senkrechte einen Winkel von etwa 5 bis 15°.

Mindestens eine Wand weist zahlreiche, in die Filterschicht gerichtete, nasenartige Vorsprünge auf. Jeder Vorsprung überdeckt eine Wandöffnung mit glattem unterem Wandabschnitt mindestens teilweise so, daß das Gas, nicht jedoch das Filtermaterial, durch die Wandöffnung treten kann.

**Fig.3**

EP 0 174 037 A1

METALLGESELLSCHAFT
Aktiengesellschaft

24. Juli 84
WGN/Dr.(Zh.)

Prov.-Nr. 9215 L

- 1 -

## Granulatfilter

Die Erfindung betrifft ein Granulatfilter mit mindestens
einer, zwischen zwei gasdurchlässigen Wänden eingeschlossenen
Filterschicht aus körnigem Filtermaterial, zum Entstauben von
Gas beim Durchströmen einer Reinigungszone der Filterschicht.

Granulatfilter dieser Art sind bekannt und z.B. in den deutschen Offenlegungsschriften 30 12 911 und 32 46 183, der deutschen Auslegeschrift 25 52 298 und den US-Patentschriften
4 142 873 und 4 353 722 beschrieben. Die Filterschicht wird
hierbei aus Granulat, z.B. Sand oder Kies, mit einer Korngröße
im Bereich von etwa 1 bis 5 mm gebildet. Die gasdurchlässigen
Wände der Filter sind üblicherweise senkrecht und parallel zueinander ausgebildet. Sie können z.B. aus Drahtnetzen bestehen, wobei die Maschenweite kleiner als die kleinste Korngröße
des Filtermaterials ist. Bei solchen Drahtnetzen ist die Gasdurchlässigkeit der Filterwand verringert, dazu sind die Herstellungskosten der Filterwände recht hoch, wenn man eine ausreichende Stabilität der Wand anstrebt.

Bei bekannten Filtern, wie sie etwa in der DE-OS 32 46 183 und der DE-AS 25 52 298 beschrieben sind, ist man deshalb zu jalousieartig ausgebildeten Wänden übergegangen. Hierbei hat sich allerdings gezeigt, daß diese Filter in Betrieb zu Anbackungen an den Filterwänden neigen, weil das körnige Filtermaterial und auch der abzuscheidende Staub an den Innenflächen der Wände gute Haftungsflächen vorfinden. Es ist ziemlich aufwendig, diese Anbackungen an den Filterwänden regelmäßig zu entfernen.

In der Reinigungszone einer Filterschicht nimmt bei bekannten Filtern mit von oben nach unten konstanter Dicke der Filterschicht die Staubkonzentration zu. Im oberen Bereich der Filterschicht, wo frisches Filtermaterial zuläuft, ist die Staubkonzentration am niedrigsten und die Reinigungswirkung des Filters am besten. Nach unten nimmt die Staubkonzentration in der Filterschicht immer mehr zu, weil sich das Filtermaterial während des Betriebes periodisch oder kontinuierlich nach unten bewegt und der abgeschiedene Staub mitgenommen wird, auch ist der Staub in der Lage, nach unten in das Lückenvolumen des körnigen Filtermaterials zu rieseln. Dadurch verschlechtert sich die Reinigungswirkung des unteren Bereichs der Filterschicht immer mehr, auch kommt es in diesem Bereich verstärkt zu Anbackungen an den Filterwänden.

Der Erfindung liegt die Aufgabe zugrunde, die Reinigungswirkung der Filterschicht, von oben nach unten betrachtet, etwa konstant zu halten und Anbackungen an den Filterwänden möglichst zu vermeiden. Beim Granulatfilter der eingangs genannten Art geschieht dies erfindungsgemäß dadurch, daß die Filterschicht im Bereich der Reinigungszone durch mindestens eine schräg verlaufende Wand von oben nach unten verbreitert ausgebildet ist.

Da die Filterschicht und damit die Reinigungszone von oben nach unten immer breiter wird, kann die Staubmenge von oben
nach unten zunehmen, ohne daß sich gleichzeitig die mittlere
Staubkonzentration allzu stark verändert. Damit behält das
Filter auch im unteren Bereich der Reinigungszone eine gute
Reinigungswirkung, und Staubanbackungen an der Filterwand, die
bei bekannten Filtern durch hohe Staubkonzentration auftreten,
werden vermieden.

Eine nach unten zunehmende Verbreiterung der Filterschicht
kann man etwa dadurch erreichen, daß eine der beiden Wände um
einen Winkel von etwa 5 bis 20°, gegen die Senkrechte gemessen, schräg verlaufend ausgebildet ist. Bei dieser schrägen
Filterwand kann es sich entweder um die Wand an der Gaseintrittsseite oder um die an der Gasaustrittsseite handeln. Um
ganz sicher zu gehen, bildet man beide Wände der Filterschicht
um einen Winkel von etwa 5 bis 15°, gegen die Senkrechte gemessen, schräg verlaufend aus.

Eine Weiterbildung der Erfindung besteht darin, daß mindestens
eine Wand zahlreiche, in die Filterschicht gerichtete, nasenartige Vorsprünge aufweist, wobei jeder Vorsprung eine Wandöffnung mit glattem unterem Wandabschnitt mindestens so überdeckt, daß das Gas, nicht jedoch das Filtermaterial, durch die
Wandöffnung treten kann. Hierbei liegt die dem Gaseintritt
bzw. Gasaustritt zugekehrte Außenseite der Filterschicht an
dem glatten unteren Wandabschnitt einer jeden Wandöffnung an,
so daß dort die Tendenz zum Ausbilden von Anbackungen gering
ist.

Für die Wandöffnungen und die zugehörigen nasenartigen Vorsprünge sind verschiedene Abwandlungen von der Grundform möglich. Z.B. können die Vorsprünge gleichmäßig gekrümmt oder
auch abgewinkelt ausgebildet sein, und auch die Wandöffnungen
können von der sich anbietenden Dreiecksform mehr oder weniger
abweichen. Im allgemeinen haben die Wandöffnungen größte Öffnungsweiten von 0,5 bis 10 cm und vorzugsweise von 1 bis 5 cm. Vorteilhaft ist hierbei, daß die größten Öffnungsweiten größer als die Körner des Filtergranulats, das eine Körnung etwa im Bereich von 1 bis 5 mm aufweist, ausgebildet sein können, so daß eine gute Gasdurchlässigkeit der Filterwand gegeben ist.

Eine bevorzugte Ausgestaltung besteht darin, die Wandöffnungen längs horizontaler Reihen anzuordnen, wobei die Wandöffnungen der nächsthöheren Reihe gegenüber den Wandöffnungen der unmittelbar darunterliegenden Reihe versetzt angeordnet sind. Diese Anordnung der Wandöffnungen ermöglicht sowohl eine hohe Gasdurchlässigkeit als auch gute Festigkeit der Wand, ohne daß am Eintritt des zu entstaubenden Gases Haftflächen für Anbackungen entstehen.

Die Wände einer Filterschicht können eben, gewinkelt oder gekrümmt ausgebildet sein. Häufig sind die beiden Wände kegelmantelförmig ausgebildet. Die Wand an der Gaseintrittsseite kann anders als die Wand der Gasaustrittsseite gestaltet sein, da Anbackungen bevorzugt an der Wand der Gaseintrittsseite entstehen. Deshalb empfiehlt sich die Ausbildung der Wand mit Wandöffnungen und zugehörigen nasenartigen Vorsprüngen besonders für die Gaseintrittswand.

Einzelheiten des Granulatfilters werden mit Hilfe der Zeichnung erläutert. Es zeigt:

Fig. 1    in schematischer Darstellung ein dem Stand der Technik entsprechendes Granulatfilter,

Fig. 2    in vergrößerter Darstellung eine dem Stand der Technik entsprechende Granulatfilterschicht zwischen jalousieartigen Filterwänden,

Fig. 3    in schematischer Darstellung das erfindungsgemäße Granulatfilter mit schrägen Filterwänden,

0174037

Fig. 4 den Längsschnitt durch eine Filterwand mit Wandöffnungen und nasenartigen Vorsprüngen und

Fig. 5 in Draufsicht die Innenseite einer Filterwand etwa
gemäß Fig. 4.

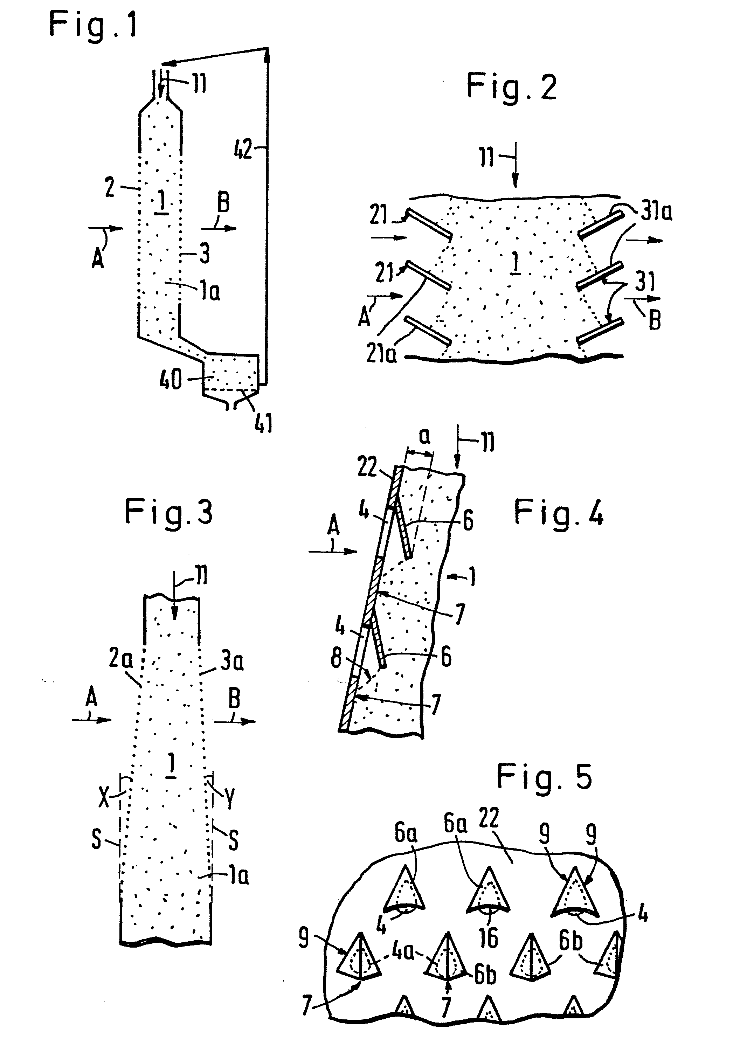

Der prinzipiellen Darstellung der Fig. 1 gemäß bestehen bekannte
Granulatfilter aus einer Filterschicht 1, die aus einer Schüttung aus körnigem Filtermaterial mit Korngrößen üblicherweise im
Bereich von 1 bis 5 mm gebildet wird. Die Filterschicht 1 ist
zwischen zwei gasdurchlässigen Wänden 2 und 3 angeordnet. Die
Wände 2 und 3 können z. B. durch engmaschige Drahtnetze gebildet
sein. Das zu entstaubende Gas durchströmt die Filterschicht 1 in
der Reinigungszone, die zwischen den gasdurchlässigen Wänden 2
und 3 liegt, etwa wie es durch die Pfeile A und B angedeutet
ist. Dabei lagert sich der Staub an der Oberfläche der Filterkörner an und wird mit den Filterkörnern nach unten mitgenommen.
Das körnige Filtermaterial wird periodisch oder kontinuierlich
aus der Reinigungszone entfernt, wobei es mit dem Staub unter
Schwerkraftwirkung in eine Abreinigungsvorrichtung 40 fließt.
Die Vorrichtung 40, die z.B. im wesentlichen aus einem Rüttelsieb 41 besteht, trennt das körnige Filtermaterial vom Staub,
das abgereinigte Filtermaterial wird dann auf dem Transportweg
42 nach oben gefördert und fließt in Richtung des Pfeils 11 der
Filterschicht 1 zur Wiederverwendung zu.

Um die Wände des Granulatfilters möglichst gasdurchlässig auszubilden, werden bei bekannten Filtern jalousieartige Wände 21 und
31 verwendet, wie sie in Fig. 2 im Längsschnitt dargestellt
sind. Diese Wände bestehen aus einzelnen, übereinander angeordneten Lamellen 21a bzw. 31a. Durch den sich am Rand der Filterschicht 1 zwischen den Lamellen ausbildenden Schüttwinkel sitzt
die Filterschicht auf der Oberseite jeder Lamelle und bedeckt
diese schräge Oberseite teilweise.

Beim Betrieb der bekannten Granulatfilter der Fig. 1 und 2 nimmt die Staubkonzentration in der Filterschicht 1 von oben nach unten zu, d. h. sie ist oben, wo frisches Filtermaterial in Richtung des Pfeils 11 zuläuft, am niedrigsten und im unteren Bereich 1a der Reinigungszone am höchsten. Dies kann dazu führen, daß der untere Bereich 1a der Reinigungszone nach einigem Betrieb für die Staubaufnahme ausfällt und dazu neigt, Staub an das durchströmende Gas abzugeben.

Zusätzlich zur Staubanreicherung im unteren Bereich der Reinigungszone besteht beim Granulatfilter mit der in Fig. 2 angegebenen Struktur die Tendenz, daß sich Feststoff-Anbackungen auf der Oberseite der Lamellen 21a, 31a ausbilden. Diese Anbackungen kommen durch die im Gas, das durch das Filter strömt, vorhandenen Stoffe zustande. Das Gas enthält nämlich häufig neben dem Staub auch Feuchtigkeit, so daß vor allem im Bereich des Gaseintritts Filterkörner mit Staub auf der Oberseite der Lamellen festkleben. Bei der Abwärtsbewegung der Filterschicht 1, die kontinuierlich oder periodisch vor sich geht, bleiben die Anbackungen an der Oberseite der Lamellen haften und können oft nur mit Mühe und unter zusätzlichen Kosten abgelöst werden. Es ist leicht einzusehen, daß dort am ehesten Anbackungen auftreten, wo die Staubkonzentration am höchsten ist.

Beim Filter der Fig. 3 wird vermieden, daß sich störende Unterschiede der Staubkonzentration zwischen dem oberen und dem unteren Bereich der Reinigungszone in der Filterschicht 1 ausbilden. Dies geschieht dadurch, daß die gasdurchlässigen Wände 2a und 3a gegenüber der Senkrechten S um einen Winkel X bzw. Y geneigt ausgebildet sind. Dadurch ist der untere Bereich 1a der Reinigungszone gegenüber dem oberen Bereich verbreitert. Die Winkel X und Y haben bevorzugt etwa 5 bis 15°. Abweichend von Fig. 3 kann man auch nur eine Wand 2a oder 3a schräg verlaufend ausbilden, wobei man dann einen Winkel im Bereich von etwa 5 bis 20° wählt.

Die Ausgestaltungen der Filterwand 22, die anhand der Fig. 4
und 5 erläutert wird, dienen vor allem dazu, sowohl in schräger
wie auch in senkrechter Anordnung der Filterwand 22 Anbackungen
möglichst zu vermeiden. Die Filterwand 22 weist über Öffnungen 4
nasenartige, in die Filterschicht 1 hineingerichtete Vorsprünge
6 auf. Die Vorsprünge 6 decken die der Gasdurchlässigkeit dienenden Öffnungen 4 dachartig ab und verhindern, daß das körnige
Filtermaterial durch die Öffnungen nach außen treten kann. Zu
jeder Öffnung gehört ein glatter unterer Wandabschnitt 7, an
dessen Innenseite das körnige Filtermaterial anliegt. An diesem
glatten Wandabschnitt 7 entstehen viel weniger leicht Anbackungen als auf der schrägen Oberseite lamellenartiger Wandstrukturen. Die Oberseite des nasenartigen Vorsprungs ist vom körnigen
Filtermaterial ganz bedeckt und von der Außenseite 8 der Granulatschüttung der Filterschicht um eine gewisse Strecke entfernt.
Der Betrieb bekannter Filter etwa gemäß Fig. 2 hat gezeigt, daß
die stärkste Neigung zum Bilden von Anbackungen dort besteht, wo
die Außenseite 8 der Filterschicht auf eine schräg nach innen
zur Filterschicht verlaufende Oberfläche der Filterwand trifft.
Dieser besonders gefährdete Wandbereich 7 ist bei der Wand 22
der Fig. 3 und 4 glatt und, in Fließrichtung des Filtermaterials
gesehen, nach außen gerichtet ausgebildet, wodurch dort Anbackungen nicht oder kaum noch entstehen können.

Fig. 5 zeigt einen Ausschnitt der Filterwand 22 in der Draufsicht auf ihre Innenseite. In Fig. 5 sind zwei Reihen der nasenartigen Vorsprünge 6a und 6b zu sehen, wobei die Vorsprünge 6b
gewinkelt und die Vorsprünge 6a über die jeweilige Öffnung 4 gewölbt ausgebildet sind. Die von der Spitze eines Vorsprungs nach
unten und außen verlaufenden Seitenkanten 9 sind mit der Wand 22
verbunden. Selbstverständlich kann eine Wand 22 allein nur mit
gleich ausgebildeten Vorsprüngen ausgebildet sein. Vorzugsweise
liegen die Wandöffnungen 4 der oberen Reihe versetzt über den
Wandöffnungen 4a der nächstniedrigeren horizontalen Reihe, wodurch der zu jeder Wandöffnung gehörende glatte untere Wandabschnitt 7 eine große Fläche erhält. Die Vorsprünge 6a der oberen Reihe überdecken mit ihrer Unterkante 16 die jeweilige Wandöffnung 4 etwas weniger als dies bei den Vorsprüngen 6b der unteren Reihe der Fall ist, doch ist durch den Schüttwinkel des körnigen Filtermaterials gewährleistet, daß auch durch die Öffnungen 4 kein körniges Filtermaterial austreten kann. In der Praxis liegen die größten Öffnungsweiten einer Wandöffnung 4 und 4a etwa im Bereich von 0,5 bis 10 cm und vorzugweise im Bereich von 1 bis 5 cm. Die nasenartigen Vorsprünge 6, 6a, 6b ragen um eine größte Strecke a, vgl. Fig. 4, von 0,2 bis 5 cm in die Filterschicht 1 hinein. Die Öffnungen 4 und 4a, vgl. Fig. 5, haben in der Draufsicht etwa die gleiche Form wie die zugehörigen Vorsprünge, nämlich etwa Dreiecksform, ihre Fläche ist aber etwas kleiner.

0174037

Patentansprüche

1.  Granulatfilter mit mindestens einer zwischen zwei gasdurchlässigen Wänden eingeschlossenen Filterschicht aus körnigem
    Filtermaterial, zum Entstauben von Gas beim Durchströmen
    einer Reinigungszone der Filterschicht, dadurch gekennzeichnet, daß die Filterschicht im Bereich der Reinigungszone durch mindestens eine schräg verlaufende Wand von oben
    nach unten verbreitert ausgebildet ist.

2.  Filter nach Anspruch 1, dadurch gekennzeichnet, daß die
    Wand um einen Winkel von etwa 5 bis 20°, gegen die Senkrechte gemessen, schräg verlaufend ausgebildet ist.

3.  Filter nach Anspruch 1 oder 2, dadurch gekennzeichnet, daß
    beide Wände der Filterschicht um einen Winkel von etwa 5
    bis 15°, gegen die Senkrechte gemessen, schräg verlaufend
    ausgebildet sind.

4.  Filter nach Anspruch 1 oder einem der folgenden, dadurch
    gekennzeichnet, daß mindestens eine Wand zahlreiche, in die
    Filterschicht gerichtete, nasenartige Vorsprünge aufweist,
    wobei jeder Vorsprung eine Wandöffnung mit glattem unterem
    Wandabschnitt mindestens teilweise so überdeckt, daß das
    Gas, nicht jedoch das Filtermaterial, durch die Wandöffnung
    treten kann.

5.  Filter nach Anspruch 4, dadurch gekennzeichnet, daß die
    Wandöffnungen größte Öffnungsweiten von 0,5 bis 10 cm und
    vorzugsweise von 1 bis 5 cm besitzen.

0174037

6. Filter nach Anspruch 4 oder 5, <u>dadurch gekennzeichnet</u>, daß die Vorsprünge gegenüber dem zugehörigen unteren Wandabschnitt um eine größte Strecke a von 0,2 bis 5 cm vorspringen.

7. Filter nach Anspruch 4 oder einem der folgenden, <u>dadurch gekennzeichnet</u>, daß die Wandöffnungen horizontale Reihen bilden, wobei die Wandöffnungen der nächsthöheren Reihe gegenüber den Wandöffnungen der unmittelbar darunterliegenden Reihe versetzt angeordnet sind.

1/1

Fig. 1

Fig. 2

Fig. 3

Fig. 4

Fig. 5

Europäisches
Patentamt

**EUROPÄISCHER RECHERCHENBERICHT**

0174037
Nummer der Anmeldung

·EP 85 20 1001

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | GB-A-1 347 731 (SUMITOMO JUKIKAI KOGYO K.K.) * Ansprüche 1,9; Figur 2 * | 1-3 | B 01 D 46/34 |
| A | DE-C- 389 548 (E. RAFTLOER) * Anspruch; Figur 2 * | 1,4,7 | |
| A | DE-A-2 429 144 (UNIVERSAL OIL PRODUCTS CO.) * Anspruch 1; Figuren 1,2,5,12 * | 4,7 | |
| A | DE-A-2 040 909 (FILTRES VERNAY S.A.) * Anspruch 1; Figur 1 * | | |

RECHERCHIERTE
SACHGEBIETE (Int Cl 4)

B 01 D 46/00
B 01 D 53/00

Der vorliegende Recherchenbericht wurde für alle Patentansprüche erstellt.

| Recherchenort | Abschlußdatum der Recherche | Prüfer |
|---|---|---|
| BERLIN | 09-12-1985 | BERTRAM H E H |